# EUROPÄISCHE PATENTSCHRIFT

(11) **EP 1 769 198 B1**
(45) Veröffentlichungstag und Bekanntmachung des Hinweises auf die Patenterteilung: **30.11.2016**
(21) Anmeldenummer: 05760876.2
(22) Anmeldetag: 24.06.2005
(51) Int. Cl.: F24C 7/08, F24C 3/12, G05G 1/08

(54) **SCHALTTAFEL FÜR EIN ELEKTROHAUS-HALTSGERÄT**
CONTROL PANEL FOR AN ELECTRICAL DOMESTIC APPLIANCE
TABLEAU DE DISTRIBUTION POUR UN APPAREIL ELECTROMENAGER

(30) Priorität: 24.09.2004 ES 200402325
(43) Veröffentlichungstag der Anmeldung: 04.04.2007
(73) Patentinhaber: BSH Hausgeräte GmbH, 81739 München (DE)
(72) Erfinder: GALINDO PEREZ, Juan Jose, E-50007 Zaragoza (ES)
(86) Internationale Anmeldenummer: PCT/EP2005/052977
(87) Internationale Veröffentlichungsnummer: WO 2006/000581

(56) Entgegenhaltungen:
- EP-A- 1 287 923
- CH-A- 255 354
- DE-U1- 8 706 669
- FR-A- 1 246 609
- US-A- 2 005 792
- US-A- 2 661 173
- US-A- 2 737 146
- US-A- 3 160 737
- US-A- 3 887 960

## Beschreibung

### TECHNISCHES GEBIET DER ERFINDUNG

Die Erfindung betrifft das Gebiet der Schalttafeln von Elektrohaushaltsgeräten, die eine Stirnseite mit Öffnungen für den Zugang der Bedienungselemente zur Steuerelektronik des Geräts und insbesondere zu den Schutzelementen der Öffnungen dieser Stirnseiten umfassen.

### ALLGEMEINER STAND DER TECHNIK

Elektrohaushaltsgeräte wie beispielsweise Öfen, Waschmaschinen, Kochfelder, Geschirrspüler usw. weisen im allgemeinen Schalttafeln mit einer Stirnseite auf, an denen sich einige Bedienungselemente zur Betätigung von Steuerelementen im Geräteinneren befinden. Diese Stirnseiten verfügen über Öffnungen für den Zugang der Bedienungselemente zu den Steuerelementen, und diese Öffnungen verfügen über Schutzelemente. Es besteht sowohl bei Glasstirnseiten als auch bei Stirnseiten aus emailliertem Metall die Gefahr, daß die Kanten der Öffnungen beschädigt werden, weswegen es notwendig ist, daß diese Öffnungen vor Stößen geschützt sind sowie die Öffnungen für den Durchlaß von Schmutz soweit wie möglich geschlossen sind.

In der Europäischen Patentschrift EP 595134 A1 ist eine Schalttafel wie die der Erfindung beschrieben, bei der das Schutzelement der Öffnung am Rand der Stirnseite angeklebt ist. In einer anderen Ausführung ist das Schutzelement ein Verbindungszwischenstück zwischen dem Bedienungselement und den Steuerelementen des Geräts in Form einer Scheibe, die die gesamte Öffnung abdeckt.

In Dokument ES 1003296 U ist in den Figuren eine Elektrohaushaltsgeräteschalttafel zu sehen, bei der die Öffnung durch ein Stück geschlossen ist, das mit seiner Innenseite an die Vorderseite des Geräts geklammert ist.

Die Patentschrift US 3887960 beschreibt ein anderes Verschlußsystem der Öffnung der Stirnseite. Es handelt sich um ein Schutzelement gegen Filtrierung von Schmutz in Form einer Scheibe, die die Öffnung der Stirnseite an seiner Außenseite schließt. Diese Scheibe umfaßt ungefähr in seiner Mitte ein rohrförmiges Zentrum zum Geräteinneren hin, das die Verbindung des Bedienungselements zu den Steuerelementen des Geräts umgibt. Das rohrförmige Zentrum endet in einer Anordnung von Klammern, die in ein Loch einer zweiten Scheibe einrasten, welches sich auf der Innenseite des Geräts befindet und die Öffnung abdeckt.

Die Patentschrift US2005792 beschreibt eine Wand eines Gasofens mit einem Bedienungselement und einem Schutzstück, wobei das Schutzstück ein Mittel zur Befestigung des Schutzstücks an der Steuereinheit aufweist.

### BESCHREIBUNG DER ERFINDUNG

Die vorliegende Erfindung hat ein Schutzelement für die Öffnungen der Stirnseiten der Öfen zur Aufgabe, das zuverlässig an der Vorderseite befestigt sein soll, ohne Bewegungen weder in Bezug zu dieser noch zu den Steuerelementen, und das im Bedarfsfall leicht abnehmbar ist.

Diese Aufgabe wird mit einer Vorrichtung gemäß Anspruch 1 gelöst.

Auf diese Weise ist die relative Bewegung zwischen dem Schutzstück und der Steuerelektronik durch ihre Verbindung begrenzt, und es sind keine Klebstoffe nötig, die das Schutzstück mit der Vorderseite verbinden und später beim Recycling Probleme bereiten können. D.h., wenn sie durch Klebstoff verbunden sind, wäre es notwendig, sie mit dem damit verbundenen Arbeitsaufwand und der damit verbundenen Arbeitszeit zu manipulieren und mit Lösungsmittel zu behandeln.

In einer Ausführung der Erfindung erstreckt sich das Schutzstück ins Innere der Öffnung und schließt die Öffnung teilweise.

Auf diese Weise kann sich das Bedienungselement, falls es zur Betätigung der Steuerelemente gedrückt werden muß, in seinem Verlauf gegen die Stirnseite über die Ebene der Vorderseitenfläche hinaus bewegen, und es sind keine Verbindungen mit großer Länge notwendig, die das Bedienungselement in einem Abstand anordnen, welcher aus ästhetischen und Sicherheitsgründen wenig empfehlenswert ist. Die Enden des Schutzstücks sind bis zum Erreichen des Rands der Öffnung auf der Außenseite de r Stirnseite der Schalttafel gefaltet, wodurch sie einen Teil dieses Rands abdecken und vor Stößen schützen. In einer Ausführung ist der gesamte Rand durch das Schutzstück abgedeckt, das neben dem Schutz vor Stößen auch Schutz gegen das Eindringen von Schmutz bietet.

Das Schutzstück kann aus Metall sein, das je nach Verbindungsart stützbeständiger ist. Außerdem ist in Metall eine Ästhetik erzielt, die mit anderen Materialien, wie mit Kunststoffen, die häufiger Anwendung finden, nicht erreichbar ist.

Erfindungsgemäß ist vorgesehen, daß die Stirnseite der Schalttafel in einer Stirnseitenhalterung gestützt ist, in der alle Steuerelemente des Geräts gestützt sind, so daß sich zwischen der Stirnseite und der Steuereinheit die Stirnseitenhalterung mit zumindest einem Loch zur Verbindung des Bedienungselements mit der Steuereinheit und zur Durchleitung der Befestigung des Schutzstücks an der Steuereinheit befindet. Die Steuereinheit wird zum Zeitpunkt der Anbringung in der Stirnseitenhalterung ohne Notwendigkeit besonderer Verbindungselemente aufgenommen, das Schutzstück wird mit der Steuereinheit verbunden, wodurch die Baugruppe fest angebracht ist.

Eine Art und Weise der Herstellung der Verbindung des Stücks mit der Steuereinheit erfolgt mithilfe von Klammern, die in Aufnahmen befestigt werden, welche zu diesem Zweck in der Steuereinheit vorgesehen sind. Dies ist die einfachste und schnellste Weise, die Befestigung herzustellen. Zu ihrer Abnahme sind Zugänge zu den Klammern von der Außenseite der Stirnseite für ein Werkzeug wie einen Dorn vorgesehen, der diese aushebelt und somit freisetzen kann.

Eine andere, einfache Art und Weise der Herstellung der Befestigung des Schutzstücks an der Steuereinheit erfolgt mithilfe einer Schraubverbindung, die die Möglichkeit eines viel stärkeren und zuverlässigeren Anziehens bietet.

Diese Art von Schalttafeln mit Stirnseiten mit Öffnungen für die Betätigung von Steuereinheiten mit Schutzstücken für die Öffnungen können bei Backöfen, Mikrowellenherden, Waschmaschinen, Geschirrspülern, Friteusen oder jeder Geräteart mit Bedienungselementen zu ihrer Betätigung benutzt sein.

### BESCHREIBUNG DER FIGUREN

Zur Vervollständigung der folgenden Beschreibung, und um zu einem besseren Verständnis der Erfindungskennzeichen zu verhelfen, liegt der vorliegenden Beschreibung ein Satz Zeichnungen bei, auf deren Grundlage die Neuheiten und Vorteile der Schalttafel, die gemäß der Aufgabe der Erfindung verwirklicht ist, besser verständlich ist.

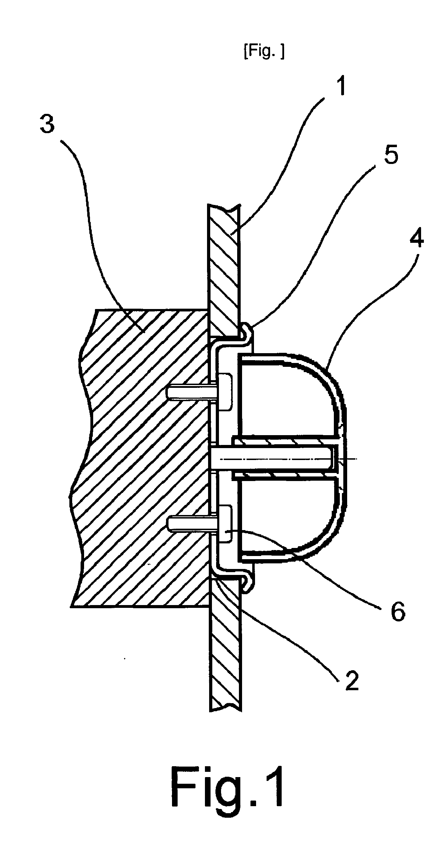

Figur 1.- zeigt eine Schnittansicht einer Schalttafel, die nicht Teil der Erfindung ist, mit ihren in Funktionsposition angebrachten Bauteilen, wobei die Stirnseite mit dem direkt mit der Steuereinheit verbundenen Schutzstück zu sehen ist.

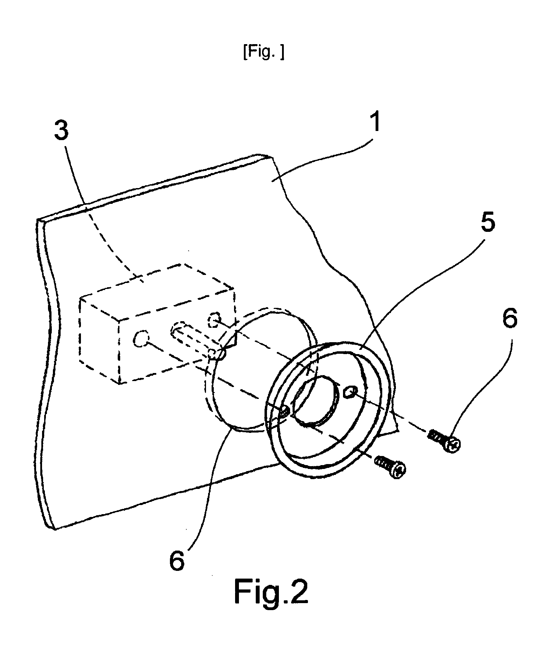

Figur 2.- zeigt eine auseinandergezogene Perspektivansicht einer Stirnseite wie der in der vorherigen Figur ohne Darstellung des Bedienungselements.

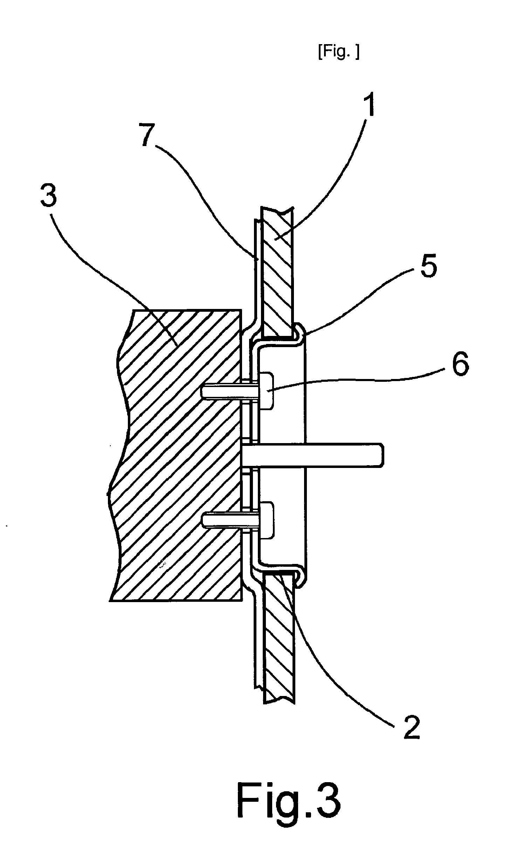

Figur 3.- zeigt eine Schnittansicht der Schalttafel gemäß der Erfindung ihren in Funktionsposition angebrachten Bauteilen, wobei die Stirnseite auf der Stirnseitenhalterung mit dem Schutzstück zu sehen ist, das über diese mit der Steuereinheit verbunden ist.

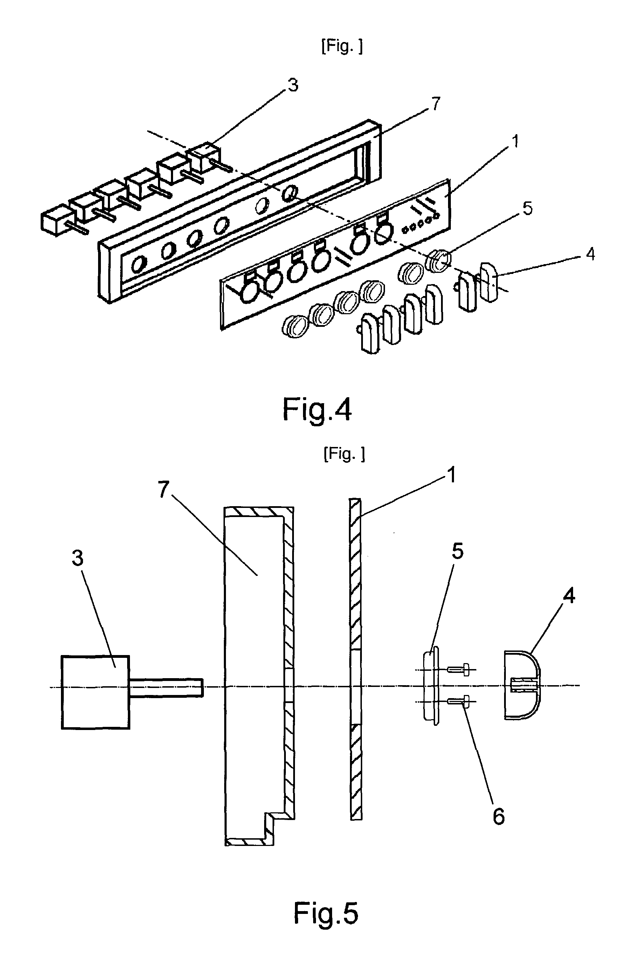

Figur 4.- zeigt eine auseinandergezogene Perspektivansicht der Schalttafel mit der Stirnseite und der Stirnseitenhalterung.
Figur 5.- zeigt eine auseinandergezogene Seitenschnittansicht der Schalttafel, die eine Stirnseitenhalterung umfaßt.

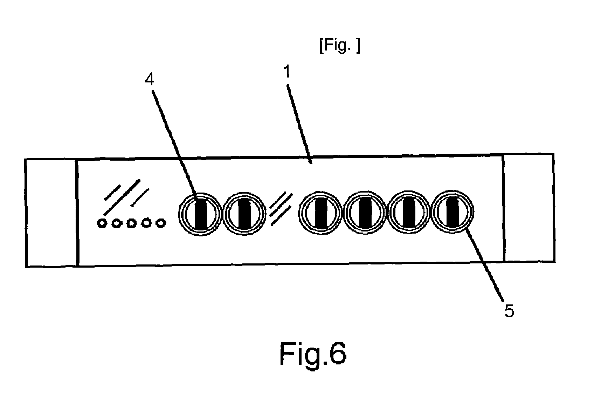

Figur 6.- zeigt eine Vorderansicht der Stirnseite der Erfindung.

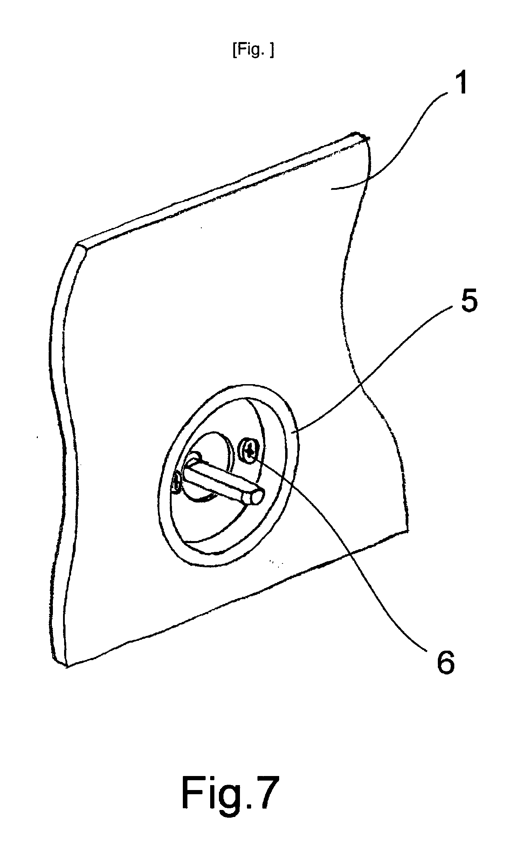

Figur 7.- zeigt eine Perspektivansicht eines Schutzstücks, das an der Stirnseite der Schalttafel verschraubt angebracht ist.

### BESCHREIBUNG EINER BEVORZUGTEN AUSFÜHRUNGSFORM

Die Schalttafel des Ofens der Erfindung umfaßt eine Stirnseite (1), hinter der sich im Inneren des Geräts die verschiedenen Steuereinheiten (3) befinden, wie beispielsweise die Leistungssteuerelemente oder eine Zeitschaltuhr.

Gegenüber der Stirnseite (1) auf der Außenseite des Geräts sind die Bedienungselemente (4) angeordnet, die über Öffnungen (2) in der Stirnseite zur Betätigung der Steuereinheiten (3) mit den Steuereinheiten verbunden sind.

Zur Anbringung dieser Schalttafeln ist eine Stirnseitenhalterung (7) vorgesehen, die als Rahmen zur Anbringung aller Elemente dient, welche die Schalttafel bilden.

Die Stirnseite (1) ist eine rechteckige Platte aus mattem Glas über nahezu die gesamte Oberfläche hinweg, mit einigen transparenten Fenstern, um das Lesen der Information zu ermöglichen, die einige Steuerelemente vorsehen. Die Stirnseite (1) umfaßt mehrere kreisförmige Öffnungen (2) für die Durchleitung der Verbindung zwischen den verschiedenen Steuereinheiten (3) und ihren entsprechenden Bedienungselementen (4).

Die Verbindung zwischen den Steuereinheiten (3) und den Bedienungselementen (4) erfolgt mithilfe einer Achse, die mit den Steuereinheiten verbunden ist. Abhängig von der Steuereinheit weist diese Achse eine unterschiedliche Bewegung auf, bei der es sich unter anderem um ausschließliche Rotation, lineare Bewegung entlang der Achse oder Drehung an einem inneren Punkt der Steuereinheit handeln kann.

Falls es erforderlich ist, das Bedienungselement (4) zur Schalttafel hin zu drücken, oder falls es aus Gründen der Ästhetik erforderlich ist, daß die Bedienungselemente nicht zu sehr aus der Hauptebene, die durch die Stirnseite (1) im Bereich des Bedienungselements (4) gebildet ist, hervorragen, muß dieses teilweise durch die Öffnung (2) eingeführt sein, die die Stirnseite (1) zum Zugang des Bedienungselements (4) zur Achse der Steuereinheit (3) aufweist, weswegen diese Öffnung weit genug sein muß, um Durchgang zu dem Bedienungselement oder eines Teils davon zu gewähren.

Auf diese Weise ist die Öffnung (2) der Stirnseite zu weit und läuft Gefahr, gestoßen oder beschädigt zu werden oder Schmutz ins Innere der Schalttafel durchzulassen, mit der entsprechenden Gefahr, das einige der Funktionsbauteile des Geräts Schaden nehmen könnten.

Um dies zu verhindern, sind metallische Schutzstücke (5) vorgesehen, die napfartig ausgebildet sind, flach auf der Bodenseite, wobei ihre Enden auf sich zurückgebogen sind. Diese Form kann leicht in einer Blechpresse hergestellt werden. Der konkave Abschnitt der Schutzstücke ist in die Öffnungen (2) eingeführt und rastet darin ein, da sie die ergänzende Form aufweist, wobei der Falz der Enden des Schutzstücks mit der Oberfläche der Stirnseite in Kontakt ist und so die Öffnung (2) vollständig verschließt.

Die Bodenseite des Schutzstücks (5), die wie bereits erwähnt napfartig mit flachem Boden ausgebildet ist, ist mit der Oberfläche der Stirnseitenhalterung (7) in Kontakt. Der Boden der Schutzstücke weist Löcher zum Durchgang der Befestigungselemente (6) auf, die Schrauben sind, welche die Stirnseitenhalterung ebenfalls durchdringen und direkt an der Steuereinheit (3) verschraubt sind.

Eine andere Art und Weise der Verbindung wäre mithilfe von Klammern. Diese können ebenfalls in der Preßmaschine des Schutzstücks (5) als Blechzunge ausgebildet sein, die hakenförmig endet. Diese ist wie ein herkömmliches Klammersystem in jeweiligen Reduzierungen der Steuereinheit (4) verzahnt.

Im Moment der Montage der Schalttafel im Werk werden über das Geräteinnere alle Steuereinheiten mit der Stirnseitenhalterung (7) verbunden und lediglich mit einigen Aufnahmen positioniert, um ihre korrekte Position bezüglich der Halterung (7) zu gewährleisten. Danach wird von der Außenseite des Geräts die Stirnseite (1) der Schalttafel angebracht, so daß die Öffnungen (2) desselben den Funktionsachsen der Steuereinheiten (3) gegenüberliegen, die ihrerseits die Halterung (7) durchdringen. Sobald die Stirnseite in der korrekten Position auf der Stirnseitenhalterung angeordnet ist, werden die Schutzstücke (5) in jede Öffnung (2) der Stirnseite (1) eingeführt, die schließlich mit den Steuereinheiten (3) verschraubt werden.

Auf diese Weise ist der Block der Schalttafel fest angebracht und bereit zum Einrasten der Bedienungselemente (4) in jede der entsprechenden Achsen der Steuereinheiten (3).

## Patentansprüche

1. Schalttafel für ein Elektrohaushaltsgerät, umfassend eine Stirnseite (1), hinter der sich im Geräteinneren in einem Bereich einer Öffnung (2) eine Steuereinheit (3) des Geräts befindet, und gegenüber der Stirnseite außen am Gerät ein Bedienungselement (4) in Verbindung mit der Steuereinheit (3) zur Betätigung der Steuereinheit (3) durch die Öffnung (2) und ein Schutzstück (5), das außen und in Kontakt mit der Stirnseite (1) an zumindest einem Teil des Rands der Öffnung angeordnet ist,
**dadurch gekennzeichnet, dass**
das Schutzstück (5) zumindest ein Mittel (6) zur Befestigung an der Steuereinheit (3) umfasst und dass sich zwischen der Stirnseite (1) und der Steuereinheit (3) eine Stirnseitenhalterung (7) mit zumindest einem Loch zur Verbindung des Bedienungselements (4) mit der Steuereinheit (3) und zur Durchleitung der Befestigung (6) des Schutzstücks (5) an der Steuereinheit befindet.

2. Schalttafel für ein Elektrohaushaltsgerät nach Anspruch 1,
**dadurch gekennzeichnet, dass** sich das Schutzstück (5) am gesamten Rand der Öffnung (2) stützt.

3. Schalttafel für ein Elektrohaushaltsgerät nach einem der vorhergehenden Ansprüche,
**dadurch gekennzeichnet, dass** das Schutzstück (5) durch die Öffnung (2) in das Geräteinnere eingeführt ist.

4. Schalttafel für ein Elektrohaushaltsgerät nach einem der vorhergehenden Ansprüche,
**dadurch gekennzeichnet, dass** das Schutzstück (5) aus Metall ist.

5. Schalttafel für ein Elektrohaushaltsgerät nach einem der vorhergehenden Ansprüche,
**dadurch gekennzeichnet, dass** das Befestigungsmittel (6) ein Befestigungsmittel mithilfe von Klammern ist.

6. Schalttafel für ein Elektrohaushaltsgerät nach einem der Ansprüche 1 bis 4,
**dadurch gekennzeichnet, dass** das Befestigungsmittel (6) ein Befestigungsmittel mithilfe von Schrauben ist.

7. Backofen mit einer Schalttafel nach einem der vorhergehenden Ansprüche.

## Claims

1. Control panel for an electrical domestic appliance, comprising a front side (1), behind which a control unit (3) of the appliance is located in the appliance interior in a region of an opening (2), and opposite the front side on the outside of the appliance an operating element (4) connected to the control unit (3) for actuating the control unit (3) through the opening (2) and a protection part (5), which is arranged on the outside and in contact with the front side (1) on at least one part of the edge of the opening,
**characterised in that**
the protection part (5) comprises at least one means (6) for fastening to the control unit (3) and a front side bracket (7) with at least one hole for connecting the operating element (4) to the control unit (3) and for passing through the fastening (6) of the protection part (5) to the control unit is located between the front side (1) and the control unit (3).

2. Control panel for an electrical domestic appliance according to claim 1,
**characterised in that** the protection part (5) rests on the entire edge of the opening (2).

3. Control panel for an electrical domestic appliance according to one of the preceding claims,
**characterised in that** the protection part (5) is introduced into the appliance interior through the opening (2).

4. Control panel for an electrical domestic appliance according to one of the preceding claims,
**characterised in that** the protection part (5) is made of metal.

5. Control panel for an electrical domestic appliance according to one of the preceding claims,
**characterised in that** the fastening means (6) is a fastening means assisted by clamps.

6. Control panel for an electrical domestic appliance according to one of claims 1 to 4,
**characterised in that** the fastening means (6) is a fastening means assisted by screws.

7. Oven with a control panel according to one of the preceding claims.

## Revendications

1. Tableau de distribution pour un appareil électroménager, comprenant une face frontale (1) derrière laquelle se trouve une unité de commande (3) de l'appareil, à l'intérieur de l'appareil dans une zone d'un orifice (2) et dans lequel un élément de commande (4) en lien avec l'unité de commande (3) pour actionner l'unité de commande (3) via l'orifice (2) est disposé à l'opposé de la face frontale à l'extérieur de l'appareil et une pièce de protection (5) est disposée à l'extérieur et en contact avec la face frontale (1) sur au moins une partie du bord de l'orifice, **caractérisé en ce que** la pièce de protection (5) englobe au moins un moyen (6) de fixation à l'unité de commande (3) et **en ce qu'**une fixation de face frontale (7) avec au moins un trou servant à relier l'élément de commande (4) à l'unité de commande (3) et à acheminer le moyen de fixation (6) de la pièce de protection (5) sur l'unité de commande se trouve entre la face frontale (1) et l'unité de commande (3).

2. Tableau de distribution pour un appareil électroménager selon la revendication 1, **caractérisé en ce que** la pièce de protection (5) repose sur l'ensemble du bord de l'orifice (2).

3. Tableau de distribution pour un appareil électroménager selon l'une des revendications précédentes, **caractérisé en ce que** la pièce de protection (5) est introduite à l'intérieur de l'appareil via l'orifice (2).

4. Tableau de distribution pour un appareil électroménager selon l'une des revendications précédentes, **caractérisé en ce que** la pièce de protection (5) est en métal.

5. Tableau de distribution pour un appareil électroménager selon l'une des revendications précédentes, **caractérisé en ce que** le moyen de fixation (6) est un moyen de fixation à pinces.

6. Tableau de distribution pour un appareil électroménager selon l'une des revendications 1 à 4, **caractérisé en ce que** le moyen de fixation (6) est un moyen de fixation à vis.

7. Four avec un tableau de distribution selon l'une des revendications précédentes.
